(19) Europäisches Patentamt
European Patent Office
Office européen des brevets

(11) **EP 4 804 654 A1**

(12) **EUROPEAN PATENT APPLICATION**
published in accordance with Art. 153(4) EPC

(43) Date of publication:
**09.09.2026 Bulletin 2026/37**

(21) Application number: **24892604.0**

(22) Date of filing: **27.02.2024**

(51) International Patent Classification (IPC):
***H04W 56/00*** *(2009.01)*

(86) International application number:
**PCT/CN2024/078642**

(87) International publication number:
**WO 2025/107436 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.11.2023 CN 202311584833**

(71) Applicant: **Shenzhen Inovance Technology Co., Ltd.**
**Shenzhen, Guangdong 518000 (CN)**

(72) Inventors:
- **HUANG, Yixiang**
**Shenzhen, Guangdong 518000 (CN)**
- **ZHU, Zhijun**
**Shenzhen, Guangdong 518000 (CN)**
- **LI, Changgeng**
**Shenzhen, Guangdong 518000 (CN)**
- **ZHOU, Xiong**
**Shenzhen, Guangdong 518000 (CN)**
- **RUAN, Shuisheng**
**Shenzhen, Guangdong 518000 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

# (54) CLOCK SYNCHRONIZATION METHOD, DEVICE, AND COMPUTER READABLE STORAGE MEDIUM

(57) The present application discloses a clock synchronization method, a device and a computer-readable storage medium, relates to the technical field of communication. The method includes: selecting a master clock source inside the base station as a clock synchronization source of the convergence control system; constructing a wired synchronization master clock message and an air interface synchronization master clock message according to the clock synchronization source; and sending the wired synchronization master clock message to a wired connection device, and sending the air interface synchronization master clock message to a wireless connection device.

selecting a master clock source inside the base station as a clock synchronization source of the convergence control system
S11
constructing a wired synchronization master clock message and an air interface synchronization master clock message according to the clock synchronization source
S12
sending the wired synchronization master clock message to a wired connection device, and sending the air interface synchronization master clock message to a wireless connection device
S13
FIG. 4

EP 4 804 654 A1

## Description

### CROSS-REFERENCE TO RELATED APPLICATIONS

This application claims priority to Chinese Patent Application No. 202311584833.2, filed on November 23, 2023, the entire contents of which are incorporated herein by reference.

### TECHNICAL FIELD

The present application relates to the technical field of communication, and in particular relates to a clock synchronization method, a device and a computer-readable storage medium.

### BACKGROUND

Clock synchronization refers to the process of keeping the clocks of a transmitting device and a receiving device synchronized in a communication system to ensure the accuracy and consistency of data.

Due to differences in communication modes and transmission media between wired and wireless systems, different clock synchronization methods are required. In a wired-wireless hybrid network, based on the principle of independent synchronization for wired and wireless systems, the entire network synchronization includes the following steps: realizing synchronization between a wired controller and the actuators directly connected to the wired controller according to an external clock synchronization source of the wired controller; realizing synchronization between wireless base stations according to an external clock synchronization source of the wireless base stations; and realizing synchronization between wireless base stations and terminals through air interface synchronization signals.

After the wired and wireless systems complete independent synchronization respectively, the wired and wireless systems identify services through data packets. However, wireless systems usually process data on a frame basis. After receiving wired data packets, the wireless frames and wired data packets have different clock synchronization sources, i.e., there may be slight differences in clock frequency and phase between the wired and wireless. These slight differences may cause timing misalignment between wireless frames and wired data packets, thereby affecting the service processing of real-time data and the production services of the factory.

The above content is only used to assist in understanding the technical solutions of the present application and does not constitute an admission that the above content is prior art.

### SUMMARY

The main objective of the present application is to provide a clock synchronization method, a device and a computer-readable storage medium, aiming to solve the technical problem of low clock synchronization reliability in a wired-wireless convergence control system.

To achieve the above objective, the present application provides a clock synchronization method applied to a base station of a convergence control system, the convergence control system includes a controller, an actuator and a terminal device. A first side of the controller is connected to the actuator via a wired communication link, a second side of the controller is connected to the base station via a wired communication link, the actuator is connected to the base station via a wired communication link, and the terminal device is connected to the base station via a wireless communication link, the clock synchronization method includes the following steps:

selecting a master clock source inside the base station as a clock synchronization source of the convergence control system;
constructing a wired synchronization master clock message and an air interface synchronization master clock message according to the clock synchronization source; and
sending the wired synchronization master clock message to a wired connection device, and sending the air interface synchronization master clock message to a wireless connection device.

In an embodiment, the constructing the wired synchronization master clock message and the air interface synchronization master clock message according to the clock synchronization source includes:

sending a clock signal corresponding to the clock synchronization source to a clock frequency divider and a phase-locked loop respectively;
performing frequency division on the clock signal through the clock frequency divider to generate a corresponding pulse per second and time information;

eliminating jitter of the clock signal through the phase-locked loop to generate a master timestamp working clock;
generating the wired synchronization master clock message according to the pulse per second and the time information; and
generating the air interface synchronization master clock message according to the master timestamp working clock, the pulse per second and the time information.

In an embodiment, the selecting the master clock source inside the base station as the clock synchronization source of the convergence control system includes:

in response to that the base station is a master base station, obtaining wireless system design requirements of the convergence control system, and determining a crystal oscillator frequency offset index according to the wireless system design requirements; and
taking a target crystal oscillator selected according to the crystal oscillator frequency offset index as the clock synchronization source.

In an embodiment, before the selecting the master clock source inside the base station as the clock synchronization source of the convergence control system, the method further includes:

in response to that the base station is configured as a slave base station, receiving the wired synchronization master clock message sent by a master base station; and
performing a synchronous clock recovery action according to the wired synchronization master clock message;
the selecting the master clock source inside the base station as the clock synchronization source of the convergence control system includes:
taking a recovered synchronous clock as the clock synchronization source.

In an embodiment, after the sending the wired synchronization master clock message to the wired connection device, and sending the air interface synchronization master clock message to the wireless connection device, the method includes:

calculating a data delivery time period of the controller through a service control cycle parameter; and
sending timing information to the controller in the data delivery time period according to the pulse per second corresponding to the clock synchronization source.

To achieve the above objective, the present application provides a clock synchronization method, applied to a controller of a convergence control system, the clock synchronization method includes the following steps:

receiving a wired synchronization master clock message sent by a base station; and
performing a synchronous clock recovery action according to the wired synchronization master clock message.

In an embodiment, after the performing the synchronous clock recovery action according to the wired synchronization master clock message, the method further includes:

receiving timing information sent by the base station; and
performing services within a specified time of the timing information.

To achieve the above objective, the present application provides a clock synchronization method, applied to an actuator of a convergence control system, the clock synchronization method includes the following steps:

receiving a wired synchronization master clock message sent by a base station or a controller; and
performing a synchronous clock recovery action according to the wired synchronization master clock message.

To achieve the above objective, the present application provides a clock synchronization method, applied to a wireless connection device of a convergence control system, wherein the clock synchronization method includes the following steps:

receiving an air interface synchronization master clock message sent by a base station;
obtaining a master timestamp working clock associated with the air interface synchronization master clock message and a slave timestamp working clock of a local device; and

performing a synchronous clock recovery action according to the master timestamp working clock and the slave timestamp working clock.

In an embodiment, before the performing the synchronous clock recovery action according to the master timestamp working clock and the slave timestamp working clock, the method further includes:

sending a delay message to the base station, and determining a sending moment of the delay message sent by the wireless connection device;
determining a receiving moment of the delay message received by the base station;
the performing the synchronous clock recovery action according to the master timestamp working clock and the slave timestamp working clock includes:
performing a synchronous clock recovery action according to the master timestamp working clock, the slave timestamp working clock, and the sending moment and receiving moment of the delay message.

To achieve the above objective, the present application further provides a base station, including: a memory; a processor; and a clock synchronization program stored on the memory and executable on the processor, the clock synchronization program is configured to implement the clock synchronization method as described above.

To achieve the above objective, the present application further provides a controller, including: a memory; a processor; and a clock synchronization program stored on the memory and executable on the processor, wherein the clock synchronization program is configured to implement the clock synchronization method as described above.

To achieve the above objective, the present application further provides an actuator, including: a memory; a processor; and a clock synchronization program stored on the memory and executable on the processor, the clock synchronization program is configured to implement the clock synchronization method as described above.

To achieve the above objective, the present application further provides a wireless connection device, including: a memory; a processor; and a clock synchronization program stored on the memory and executable on the processor, the clock synchronization program is configured to implement the clock synchronization method as described above.

To achieve the above objective, the present application further provides a computer-readable storage medium, wherein a clock synchronization program is stored on the computer-readable storage medium, and the clock synchronization program, when executed by a processor, implements the clock synchronization method as described above.

In the technical solution provided by the present application, a master clock source inside the base station is used as the clock synchronization source of the convergence control system, a corresponding wired synchronization master clock message and an air interface synchronization master clock message are constructed, and then the wired synchronization master clock message is sent to wired connection devices and the air interface synchronization master clock message is sent to wireless connection devices. In this way, the reference clock sources adopted by the downstream devices can be guaranteed to be the same, so that the clock synchronization results of the wired connection devices and the wireless connection devices are consistent, thereby effectively solving the time deviation problem between the wired connection devices and the wireless connection devices and ensuring the reliability of the clock synchronization results of the entire convergence control system.

## BRIEF DESCRIPTION OF THE DRAWINGS

FIG. 1 is a schematic diagram of clock synchronization in a wired system.
FIG. 2 is a schematic diagram of clock synchronization in a wireless system.
FIG. 3 is a schematic diagram of clock synchronization in a convergence control system.
FIG. 4 is a schematic flowchart of a clock synchronization method according to a first embodiment of the present application.
FIG. 5 is a schematic diagram of a convergence control system of the clock synchronization method according to the first embodiment of the present application.
FIG. 6 is a signaling flowchart of the clock synchronization method according to the first embodiment of the present application.
FIG. 7 is a schematic flowchart of S11 of the clock synchronization method according to the first embodiment of the present application.
FIG. 8 is a schematic flowchart of S12 of the clock synchronization method according to the first embodiment of the present application.
FIG. 9 is a schematic diagram of a deterministic enhanced wireless system of the clock synchronization method according to the first embodiment of the present application.

FIG. 10 is a schematic flowchart before S11 of the clock synchronization method according to the first embodiment of the present application.

FIG. 11 is a schematic flowchart after S13 of the clock synchronization method according to the first embodiment of the present application.

FIG. 12 is a schematic flowchart of the clock synchronization method according to a second embodiment of the present application.

FIG. 13 is a schematic flowchart after S22 of the clock synchronization method according to the second embodiment of the present application.

FIG. 14 is a schematic flowchart of the clock synchronization method according to a third embodiment of the present application.

FIG. 15 is a schematic flowchart before S33 of the clock synchronization method according to the third embodiment of the present application.

FIG. 16 is a signaling flowchart of the clock synchronization method according to the third embodiment of the present application.

FIG. 17 is a schematic diagram of the convergence control system of the clock synchronization method according to an embodiment of the present application.

FIG. 18 is a brief schematic flowchart of the convergence control system of the clock synchronization method according to an embodiment of the present application.

FIG. 19 is a schematic timing synchronization diagram of the convergence control system of the clock synchronization method according to an embodiment of the present application.

FIG. 20 is a schematic structural diagram of a device in a hardware operating environment involved in solutions of the embodiments of the present application.

The realization of the objectives, functional features and advantages of the present application will be further described with reference to the embodiments and the accompanying drawings.

## DETAILED DESCRIPTION OF THE EMBODIMENTS

It should be understood that the specific embodiments described herein are merely used to explain the present application and are not intended to limit the present application.

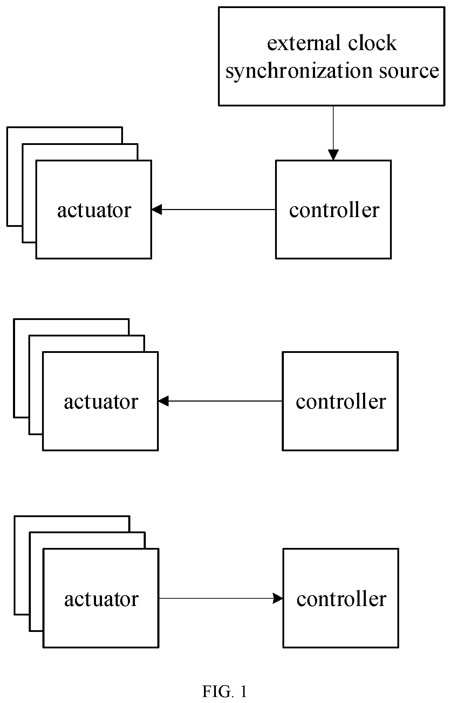

The clock synchronization source of a conventional industrial wired system is derived from a controller or an actuator, or an external clock synchronization source of a controller or an actuator. As shown in FIG. 1, a controller is connected to an external clock synchronization source, a controller serves as a clock synchronization source, and an actuator serves as a clock synchronization source, the external clock synchronization source is such as Global Navigation Satellite System (GNSS), a clock server, etc.; the actuator is such as a servo, a motor, etc.

A conventional industrial wireless system generally uses 3GPP (3rd Generation Partnership Project) 4/5G (Generation Mobile Communication Network) standards and WIFI devices for wireless communication.

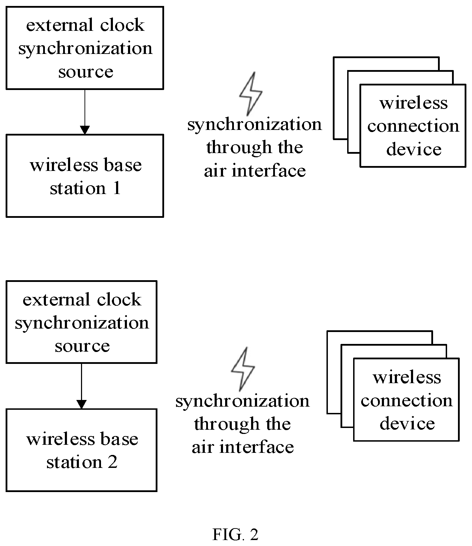

Especially for a Time Division Duplexing (TDD) system, it is difficult to coordinate clock synchronization between devices of different operators or between different standards or networking systems of the same operator. To prevent interference between different base stations and uplink and downlink interference between different terminals, the clock synchronization source is usually derived from a public standard clock source, such as a satellite clock synchronization source GNSS, a clock server, etc., externally connected to the wireless base station. As shown in FIG. 2, a base station is connected to an external clock synchronization source and then performs clock synchronization with wireless connection devices such as industrial customer premise equipment (CPE) and gateways.

In a wired-wireless hybrid network, since the wired and wireless systems have their own synchronization modes, the entire network synchronization is very important and prone to problems. If there is a problem with the entire network synchronization, it will affect the control of the entire industrial network and further affect the entire business process.

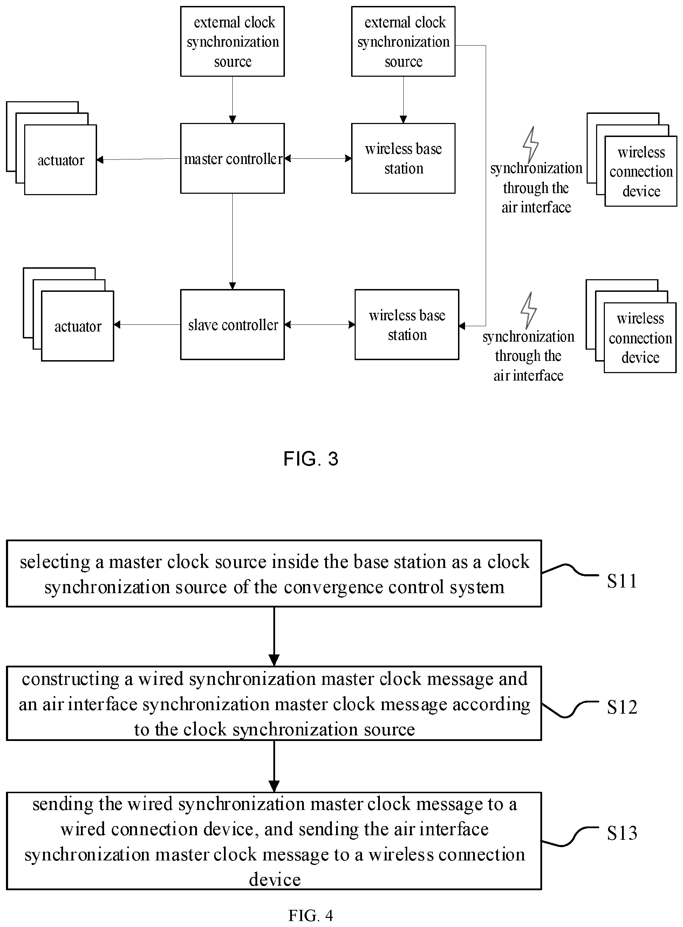

In a wired-wireless convergence control system, a scheme of independent synchronization for wired and wireless systems is usually adopted, that is, as shown in FIG. 3, the entire network synchronization includes the following steps:

a. Synchronization between the master wired controller and the actuator directly connected to the master wired controller, and between the slave wired controller and the actuator directly connected to the slave wired controller, the master controller is connected to an external clock synchronization source, and the slave controllers and actuators are synchronized with the master controller. Alternatively, the controller can also use a local clock source as the clock source for synchronization;

b. Synchronization between wireless base stations through an external clock synchronization source, such as synchronization through IEEE 1588 Precision Time Protocol (1588);

c. Synchronization between wireless base stations and terminals through the air interface.

However, the above scheme has the following problems:

a. Wireless systems usually process data on a frame basis. After receiving wired data packets, the wireless frames and wired data packets have different clock synchronization sources, i.e., there may be slight differences in clock frequency and phase between the wireless frames and wired data packets. These slight differences may cause timing misalignment between wireless frames and wired data packets, thereby affecting the service processing of real-time data and the production services of the factory;
b. If the clock source is selected as a local clock source of the controller or actuator, it usually cannot meet the clock frequency offset accuracy requirements. For example, the clock frequency offset of wired Ethernet is no more than ±100ppm, which far exceeds the clock frequency offset defined by WiFi standards: <±25ppm (802.11b); <±20ppm (802.11g/a/n). For industrial wireless communication complying with 3GPP standards, the air interface clock frequency offset requirement is less than ±0.05ppm;
c. GNSS satellite synchronization has the disadvantages of low reliability, susceptibility to interference and difficult installation and construction; external clock sources such as time servers corresponding to the 1588 protocol have the disadvantages of heavy commissioning workload, difficult fault location and high cost.

The present application provides a new clock synchronization method, a master clock source inside a base station is selected as the clock synchronization source of a convergence control system, and then clock synchronization for various wired connection devices and wireless connection devices is performed according to the clock synchronization source, so as to ensure the reliability of clock synchronization of the entire system.

To better understand the above technical solutions, the exemplary embodiments of the present application will be described in more detail below with reference to the accompanying drawings. Although the exemplary embodiments of the present application are shown in the accompanying drawings, it should be understood that the present application can be implemented in various forms and should not be limited by the embodiments set forth herein. On the contrary, these embodiments are provided to enable a more thorough understanding of the present application and to fully convey the scope of the present application to those skilled in the art.

An embodiment of the present application provides a clock synchronization method applied to a master base station of a convergence control system. As shown in FIG. 4, FIG. 4 is a schematic flowchart of a clock synchronization method according to a first embodiment of the present application.

In the embodiment, the clock synchronization method includes S11~S13.

S11, selecting a master clock source inside the base station as a clock synchronization source of the convergence control system.

S12, constructing a wired synchronization master clock message and an air interface synchronization master clock message according to the clock synchronization source.

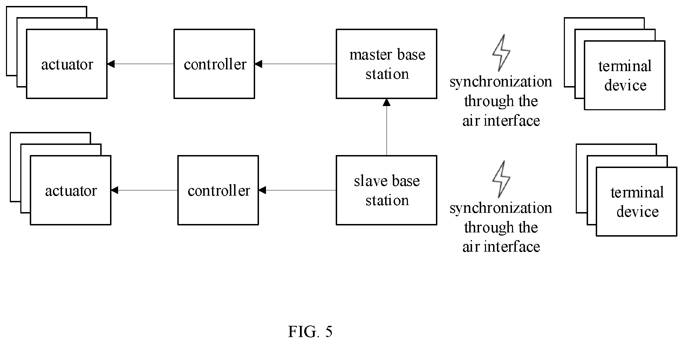

As shown in FIG. 5, the convergence control system includes several base stations, controllers, actuators and terminal devices. One of the base stations is selected as the master base station, and the remaining base stations are slave base stations. As for the connection mode, the first side of the controller is connected to the actuator via a wired communication link, and the second side is connected to the base station via a wired communication link; the actuator is connected to the actuator or the base station via a wired communication link (the figure shows only one connection mode); the terminal device is connected to the base station via a wireless communication link.

It can be understood that the base station is a core device in the system, responsible for managing and controlling various connection devices, providing services and resource allocation for them, and coordinating communication and data transmission between different devices. Wired connection devices refer to devices connected to the base station via a wired communication link, such as optical fibers, cables, etc., usually including controllers, actuators and other devices. Wireless connection devices refer to devices connected to the master base station via a wireless communication link, such as smart phones, servos, motors and other terminal devices.

The master clock source inside the base station refers to the main clock device for providing the internal time of the base station. The master clock source is crucial for the base station and even the entire convergence control system, as the master clock source provides the clock reference for the entire system and ensures synchronization and coordination between devices.

In an embodiment, a master clock source inside the base station is selected, the master clock source may be a local crystal oscillator, an external clock device, etc., which is not specifically limited in the embodiment, and then the master clock source is used as the clock synchronization source of the entire convergence control system.

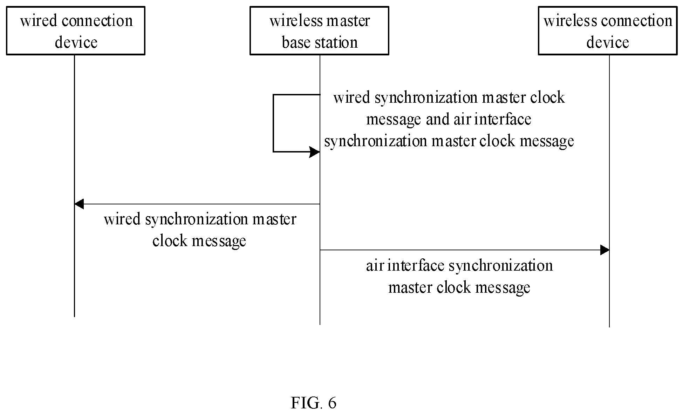

As shown in FIG. 6, a wired synchronization master clock message and an air interface synchronization master clock message are constructed according to the clock synchronization source, the wired synchronization master clock message is used to realize clock synchronization between the base station and the wired connection device, and the air

interface synchronization master clock message is used to realize clock synchronization between the base station and the wireless connection device.

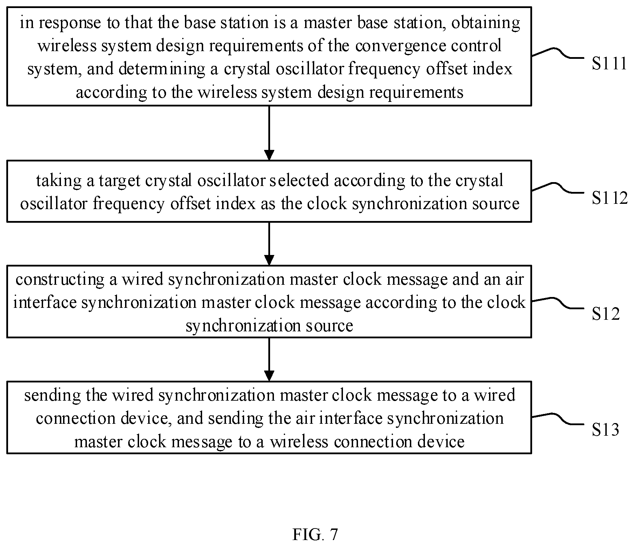

In an embodiment, as shown in FIG. 7, the S11 includes:

S111, in response to that the base station is a master base station, obtaining wireless system design requirements of the convergence control system, and determining a crystal oscillator frequency offset index according to the wireless system design requirements; and

S112, taking a target crystal oscillator selected according to the crystal oscillator frequency offset index as the clock synchronization source.

It can be understood that when the current base station is the master base station, the master clock source inside the master base station is the most basic clock synchronization source of the entire convergence control system, and the master base station may include a plurality of local crystal oscillator clock sources. In view of this situation, one of local crystal oscillator clock sources needs to be selected as the master clock source.

In an embodiment, the wireless system design requirements of the convergence control system are acquired, the wireless system design requirements includes frequency synchronization requirements, frequency offset accuracy requirements, time phase synchronization requirements, temperature range, etc. Then, crystal oscillator frequency offset indexes are determined based on the wireless system design requirements, such as multi-dimensional indexes including crystal oscillator aging rate, initial crystal oscillator frequency offset, full temperature range frequency offset, etc.

In an embodiment, crystal oscillator types include quartz crystal oscillator temperature-compensated quartz crystal oscillator (TCXO), voltagecontrolled quartz crystal oscillator (VCXO), and oven-controlled quartz crystal oscillator (OCXO). Crystal oscillator frequency offset indexes are determined based on wireless system design requirements and equipment life cycle. The crystal oscillator frequency offset indexes include crystal oscillator aging rate, initial crystal oscillator frequency offset and full temperature range frequency offset within a 10-year time span. Maximum spectrum superposition analysis is performed on all crystal oscillator types according to these crystal oscillator frequency offset indexes, and an appropriate target crystal oscillator is selected as the clock synchronization source according to wireless system design requirements, such as frequency synchronization requirements≤10PPM or 20PPM.

The solution selects an appropriate target crystal oscillator from a plurality of local crystal oscillators inside the master base station according to the crystal oscillator frequency offset index, and the target crystal oscillator is used as the clock synchronization source. The local crystal oscillator can generate a clock signal without relying on an external clock source, which means that the master base station can generate accurate time information even without an external network connection, and is also not easily affected by the external environment, so the master base station has stronger independence and stability.

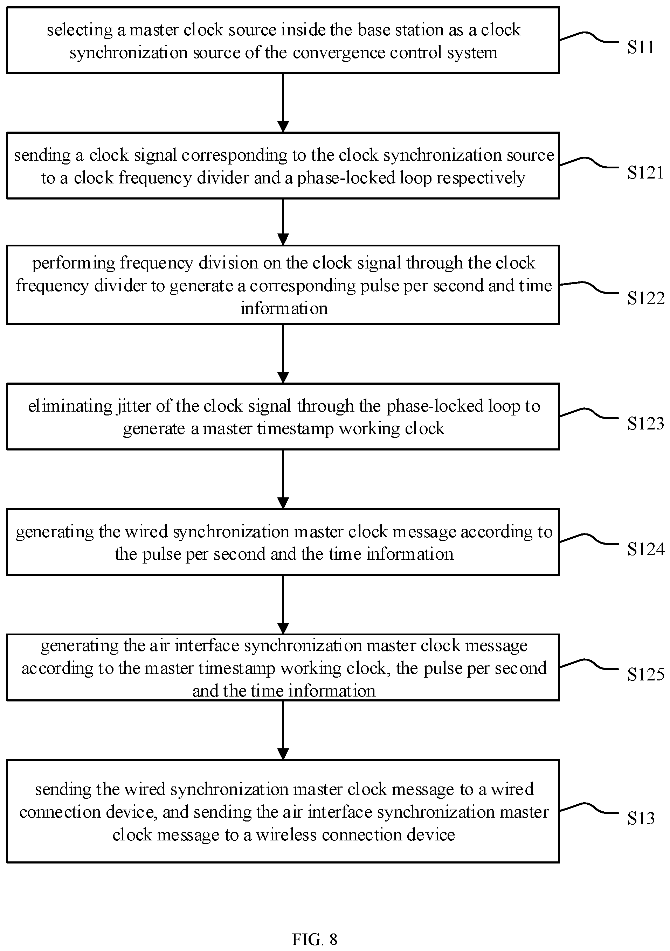

In an embodiment, as shown in FIG. 8, S12 includes:
S121, sending a clock signal corresponding to the clock synchronization source to a clock frequency divider and a phase-locked loop respectively.

It can be understood that a crystal oscillator is an electronic oscillator that generates a stable frequency through crystal oscillation, and the frequency of the clock signal generated by the crystal oscillator is fixed and may not meet the synchronization requirements, so frequency adjustment is required.

In an embodiment, after connecting the target crystal oscillator to the driver, an appropriate power supply is provided for the crystal oscillator driver to ensure that the voltage and current meet the requirements of the driver, and then the clock signal corresponding to the clock synchronization source is measured and acquired through a test device such as an oscilloscope.

S122, performing frequency division on the clock signal through the clock frequency divider to generate a corresponding pulse per second and time information.

It can be understood that a clock frequency divider is a circuit used to divide an input high-frequency clock signal by a certain frequency division multiple to obtain a lower-frequency signal for use in a digital system.

In an embodiment, the clock signal generated by the driver has a high frequency, so the clock signal is input to the clock frequency divider, and the input clock signal is counted and divided through programmable devices such as complex programmable logic device (CPLD) and field programmable gate array (FPGA) therein, and then output, finally a frame header pulse signal is obtained. The frame header pulse signal is essentially a short pulse signal, such as 1ms or 10ms, used to identify the time-domain starting point of a wireless frame.

A counter circuit is designed in the FPGA or CPLD to count the number of frame header pulse signals. Each time a frame header pulse signal is detected, the counter increments by 1, and when the value of the counter reaches a preset value, a short pulse signal is generated, that is, a pulse per second (PP1S) is generated. In an embodiment, if the frame header pulse signal is 10ms, a PP1S is formed when the counter accumulates to 100.

Taking the frame header pulse signal as an interrupt trigger signal, the current reference time can be read, such as the reference time provided by a local real-time clock or an external clock reference source, and the current time

information (Time of Day, TOD) is calculated in combination with the count value of the frame header pulse signal. In an embodiment, when the frame header pulse signal is detected, the reference time provided by the real-time clock is 10:30:25, and the count value of the frame header pulse signal is 8, then the TOD can be calculated as 10:30:25 + 80ms.

Step S123, eliminating jitter of the clock signal through the phase-locked loop to generate a master timestamp working clock.

The solution adopts a timestamp tagging method to enhance the transmission certainty between the base station and the wireless connection device.

It can be understood that a phase locked loop (PLL) is a common circuit used to generate a stable clock signal, the phase locked loop can eliminate jitter in the clock signal and provide a stable clock signal as the working clock of the system.

In an embodiment, the clock signal is input to the phase-locked loop, and after jitter elimination, a stable, low-jitter clock signal is output, and then the clock signal generated by the phase-locked loop is sent to the clock input ports of devices such as a processor, a switching chip, and a network port PHY chip to form a stable working clock.

Since these devices usually have built-in clock modules, the above working clock can be used to timestamp data packets or events, and these timestamps can be used to record the time when events occur, namely, forming a master timestamp working clock.

Step S124, generating the wired synchronization master clock message according to the pulse per second and the time information.

It can be understood that the pulse per second signal is usually used for clock synchronization and timing, and can be used as a reference time to trigger the processor to perform specific operations.

In the solution, the pulse per second is used as a write signal. When a specific pulse per second is detected, the processor encodes the current time information into a specific format, such as a binary format, according to the signal, for transmission and analysis. Then, according to protocol and format requirements, the time information in a specific format is written into a blank message to generate a wired synchronization master clock message.

Step S125, generating the air interface synchronization master clock message according to the master timestamp working clock, the pulse per second and the time information.

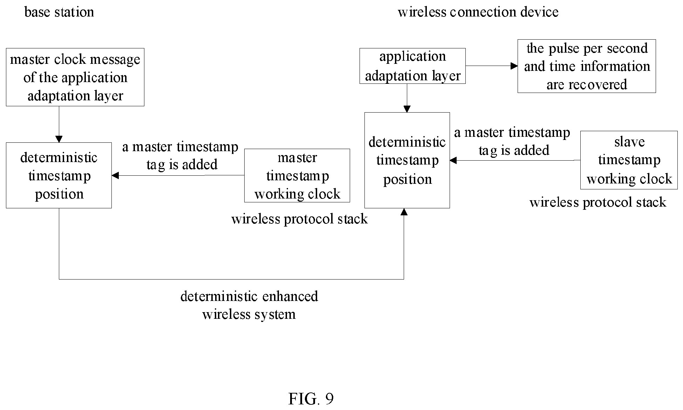

In an embodiment, as shown in FIG. 9, in the application adaptation layer, a master clock message to be timestamped is generated according to the pulse per second and time information, and the specific method is the same as step S124. On this basis, based on the master timestamp working clock, a master timestamp tag is added to the deterministic timestamp position of the master clock message to be timestamped, such as the physical layer, data link layer, etc., thereby an air interface synchronization master clock message is generated. The master timestamp tag here can be used as a time information tag to help the downstream wireless connection device adjust its own clock to keep synchronized with the clock of the base station.

In the solution, the master clock message is generated based on the pulse per second and time information. Since the pulse per second is a real-time generated time signal, it is not affected by network delay and transmission time, nor by the network or external server, so the pulse per second helps to improve the independence and stability of clock synchronization. In addition, the solution provides a deterministic enhanced wireless system, that is, the base station adds a master timestamp tag to the master clock message at the deterministic timestamp position. In this way, after receiving the master clock message, the wireless connection device can also add a slave timestamp tag accordingly, and then clock synchronization can be performed according to the master clock message and the slave timestamp tag. The arrangement takes into account the impact of network delay and fluctuation on message transmission. The timestamp synchronization adopted in the solution can help the receiving end better understand the sending time of data messages, thereby resisting the impact of network delay and fluctuation on clock synchronization accuracy.

Step S13, sending the wired synchronization master clock message to a wired connection device, and sending the air interface synchronization master clock message to a wireless connection device.

It can be understood that, as a master device, the base station needs to send the master clock message to the downstream devices for the downstream devices to recover the synchronous clock.

In an embodiment, the wired synchronization master clock message is sent to the wired connection device through network port transmission, and the air interface synchronization master clock message is sent to the wireless connection device through air interface transmission.

In an embodiment, the transmission of messages between the base station and the wired connection device through the network port mainly includes the following two types of clock synchronization protocols.

The first type: 802.1as, path mtu discovery protocol (PTCP), common internet protocol signaling synchronization (CIP sync), 802.1as, PTCP and CIP sync are clock synchronization protocols derived from 1588.

802.1as makes more specific provisions and restrictions on 1588, PTCP cuts the functions of 1588, and CIP sync uses the ETE measurement method of the 1588 protocol and expands the time step detection function.

Taking the master base station and the slave base station as an example, the type of synchronization requires the master station to transmit information to the slave station using an independent message, and the slave station also

responds with an independent message, and the core algorithm needs to be implemented in the master station and the slave station.

The second type: powerlink communication (Powerlink), siemens real-time communication protocol (SercosIII), ethernet for control automation technology (EtherCAT).

Features: logical ring structure, the logical ring structure simplifies the link delay calculation mechanism, and the calculation of link delay and residence time needs to be implemented in the master station.

Wired PTP clock synchronization accuracy: taking IEEE 802.1as as an example, IEEE 802.1AS is adjusted by cutting on the basis of IEEE 1588. The protocol works at the link layer, inserts time information into data frames, and transmits data frames to each network node. In a network environment with a maximum of 7 hops, the clock synchronization error can be guaranteed to be within 1μs.

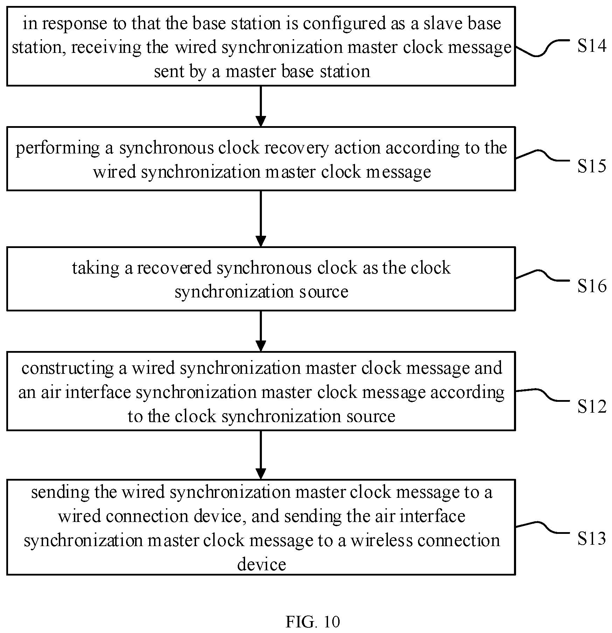

In addition, as shown in FIG. 10, before S11, the method includes:

S14, in response to that the base station is configured as a slave base station, receiving the wired synchronization master clock message sent by a master base station; and
S15, performing a synchronous clock recovery action according to the wired synchronization master clock message.

It can be understood that when the current base station is a slave base station, the current base station does not need to perform operations such as frequency division and jitter elimination on the local crystal oscillator, and only needs to perform clock synchronization according to the message sent by the upstream master base station.

In an embodiment, the corresponding port is monitored according to the port information of the message sent by the master base station, so as to receive the wired synchronization master clock message sent by the master base station in real time. After receiving the message, the following operations are performed:
On the one hand, according to the communication protocol used by the master base station to send the message, the position and format of the time information contained in the message are determined, and then the field or data structure containing the time information of the master clock source is found, parsed and processed to obtain readable time information.

On the other hand, the current local time of the local clock is obtained by calling an interface.

At this point, the time information of the master base station and the local time information can be compared to calculate the time deviation. The time deviation can be obtained by a simple subtraction operation, that is, the time of the master base station minus the local time.

After calculating the time deviation, the calculated time deviation needs to be applied to the clock of the local device to adjust the local clock for clock synchronization. Specific adjustment methods include time counter adjustment, clock frequency adjustment, clock reset, etc. Taking time counter adjustment as an example, in some devices, the clock counter is used to record time, so the clock time can be changed by adjusting the counter value. For example, if the counter value is 1 second faster than the actual time, the counter value can be subtracted by 1 second to adjust the clock.

S11 includes:
S16, taking a recovered synchronous clock as the clock synchronization source.

In an embodiment, after the slave base station completes the synchronous clock recovery action, the clock of the slave base station is consistent with the clock of the master base station. At this point, the internal clock source of the slave base station can be used as a new clock synchronization source to perform clock synchronization on the downstream devices.

In the process of clock synchronization for the downstream devices of the slave base station, the previous pulse per second and time information can be used again, so as to improve the overall efficiency of time synchronization.

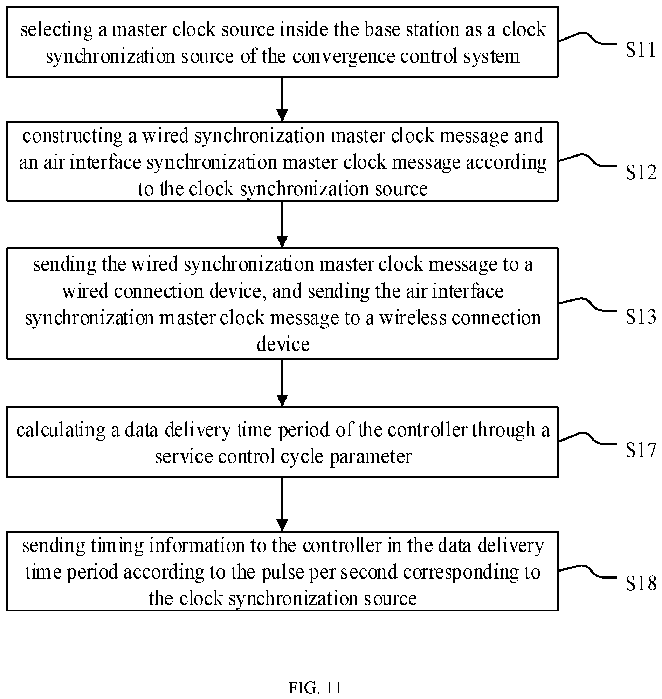

In addition, as shown in FIG. 11, after S13, the method further includes S17~S18.

S17, calculating a data delivery time period of the controller through a service control cycle parameter.

It can be understood that after the base station and the controller complete clock synchronization, the solution also provides a timing control method between the base station and the controller to support the realization of business functions between the base station and the controller.

The service control cycle parameter refers to a time parameter that controls the realization of business functions, usually including frame structure, transmission timing, access control cycle, scheduling cycle, etc. The frame structure defines the time slot and duration of each communication frame, so that the master base station and the controller can perform data transmission and control signaling exchange within a specific time. The transmission timing determines the timing and sequence of data transmission to ensure that data can be transmitted and processed in the correct sequence and timing. The access control cycle is configured to control the access and departure of user equipment to ensure the reasonable allocation and management of network resources. The control cycle is configured to schedule and allocate wireless resources to meet different business needs and optimize network performance.

In an embodiment, the base station calculates the application layer data delivery time period given by the controller through the above parameters, and determines the timing, sequence and transmission duration of data

transmission.

In an embodiment, it is assumed that the base station needs to send actuator feedback data to the controller, the base station first calculates the application layer data delivery time period given by the controller according to service control cycle parameters, such as frame structure, transmission timing, etc. In this way, the base station may be calculated that one frame of actuator feedback data needs to be sent to the controller every 10ms.

S18, sending timing information to the controller in the data delivery time period according to the pulse per second corresponding to the clock synchronization source.

In an embodiment, the base station sends timing information to the controller at a corresponding time point according to the interrupt of the base station, i.e., the pulse per second corresponding to the clock synchronization source, to notify the controller to complete business operations within a specified time, such as data collection, processing, delivery, etc.

In an embodiment, the base station sends timing information to the controller every 10ms according to the pulse per second, the timing information may include timestamp, time interrupt, data packet sending time area, etc. In this way, after receiving the timing information sent by the base station, the controller schedules the delivery of application layer data every 10ms.

In this way, the base station and the controller can communicate and cooperate at a predetermined time point to support the realization of business functions and the reliability of data transmission, thereby ensuring the stability and performance of the communication system and improving user experience.

In a technical solution provided in the embodiment, a master clock source inside the base station is used as the clock synchronization source of the convergence control system, a corresponding wired synchronization master clock message and an air interface synchronization master clock message are constructed, and then the wired synchronization master clock message is sent to the wired connection devices and the air interface synchronization master clock message is sent to the wireless connection devices. In this way, the reference clock sources adopted by the downstream devices can be guaranteed to be the same, so that the clock synchronization results of the wired connection devices and the wireless connection devices are consistent, thereby effectively solving the time deviation problem between the wired connection device and the wireless connection device, and ensuring the reliability of the clock synchronization results of the entire convergence control system.

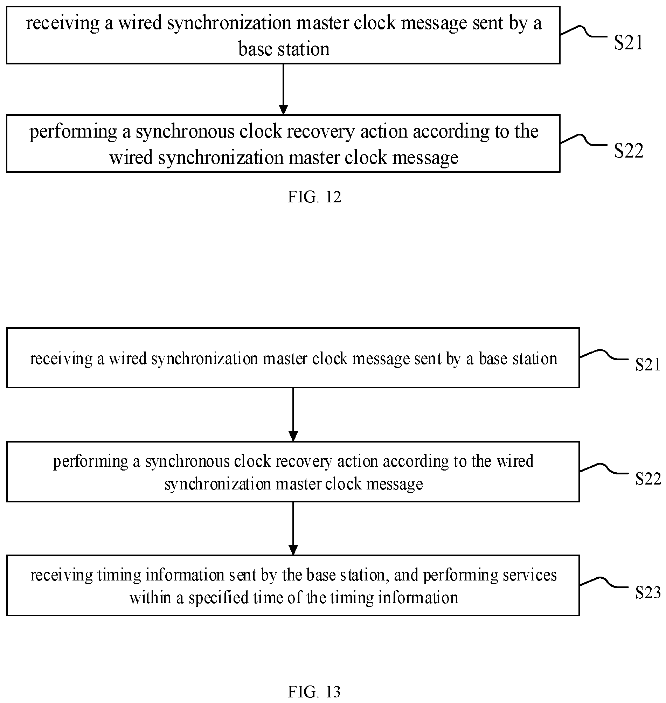

An embodiment of the present application provides a clock synchronization method applied to a controller of a convergence control system. As shown in FIG. 12, FIG. 12 is a schematic flowchart of the clock synchronization method according to a second embodiment of the present application.

In the embodiment, the clock synchronization method includes:

Step S21, receiving a wired synchronization master clock message sent by a base station; and

Step S22, performing a synchronous clock recovery action according to the wired synchronization master clock message.

In an embodiment, the second side of the controller of the convergence control system is connected to the base station via a wired communication link, so the controller receives the wired synchronization master clock message sent by the base station through the network port.

On the one hand, the time information of the base station is determined according to the wired synchronization master clock message; on the other hand, the local time information of the controller is obtained, the time information of the base station and the local time information of the controller are compared, and the synchronous clock recovery action is performed on the actuator according to the comparison result. The specific principle is the same as that of the synchronous clock recovery action of the slave base station in the first embodiment, and will not be repeated here.

In addition, as shown in FIG. 13, after S22, the method includes:
Step S23, receiving timing information sent by the base station, and performing services within a specified time of the timing information.

It can be understood that after the base station and the controller complete clock synchronization, the solution also provides a timing control method between the base station and the controller to support the realization of business functions between the base station and the controller.

In an embodiment, when the controller receives the timing information sent by the base station, the controller performs services within a specific time period according to the timing information, such as data collection, processing, delivery, etc.

In an embodiment, after receiving the timing information sent by the base station, the controller cooperates at a predetermined time point, such as scheduling the delivery of application layer data every 10ms, to support the transmission and playback of actuator feedback data and ensure the reliability and real-time performance of data transmission.

As for the actuator of the convergence control system, since the actuator is connected to the actuator or the base station via a wired communication link, the actuator receives the wired synchronization master clock message sent by the

base station or the controller through the network port. Then, the synchronous clock recovery action is performed according to the wired synchronization master clock message. The specific principle is the same as that of the actuator, and will not be repeated here.

In a technical solution provided in the embodiment, after receiving the wired synchronization master clock message sent by the base station, the wired connection device performs a synchronous clock recovery action according to the wired synchronization master clock message. That is, the wired connection device performs synchronization based on the master clock source inside the base station, and so does the wireless connection device, i.e., the reference clock sources of the wired connection device and the wireless connection device are the same. In this way, the clock synchronization results of the wired connection device and the wireless connection device are consistent, thereby effectively solving the time deviation problem between the wired connection device and the wireless connection device and ensuring the reliability of the clock synchronization results of the entire convergence control system.

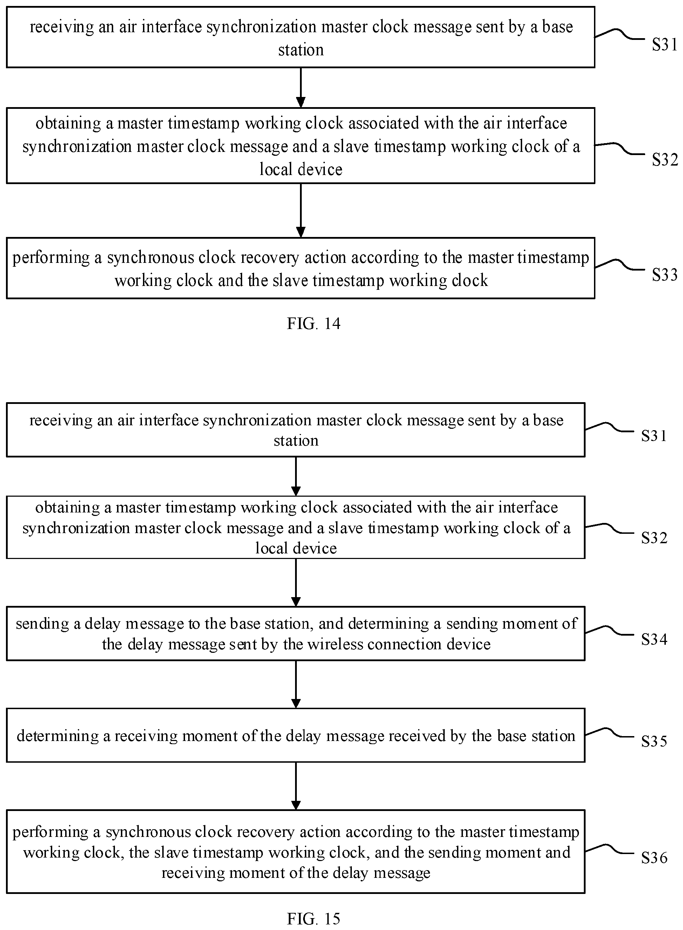

An embodiment of the present application provides a clock synchronization method applied to a wireless connection device of a convergence control system. As shown in FIG. 14, FIG. 14 is a schematic flowchart of the clock synchronization method according to a third embodiment of the present application.

In the embodiment, the clock synchronization method includes:

S31, receiving an air interface synchronization master clock message sent by a base station;

S32, obtaining a master timestamp working clock associated with the air interface synchronization master clock message and a slave timestamp working clock of a local device; and

S33, performing a synchronous clock recovery action according to the master timestamp working clock and the slave timestamp working clock.

In an embodiment, as shown in FIG. 9, the entire base station is regarded as a physical layer, and the air interface synchronization master clock message is transmitted to the wireless connection device through the air interface of the deterministic enhanced wireless system. Correspondingly, the wireless connection device receives the wireless signal carrying the air interface synchronization master clock message sent by the base station, and obtains a digital data stream through signal conversion, digital demodulation and other steps.

Subsequently, the digital data stream is processed by the physical layer, including channel decoupling, channel estimation, equalization and other processing, to restore the original data information. The data processed by the physical layer is sent to the data link layer for further processing, including parsing message header information, extracting valid data and other operations.

After the above processing, the master timestamp working clock associated with the air interface synchronization master clock message can be obtained, and the slave timestamp working clock used locally by the wireless connection device can be obtained.

At this point, the time deviation between the base station and the wireless connection device can be determined according to the master timestamp working clock and the master timestamp working clock, and then the synchronous clock recovery action is performed according to the time deviation.

In an embodiment, a deterministic timestamp position is set, including but not limited to the physical layer, data link layer or other positions, and then the master timestamp tag added by the master timestamp working clock and the slave timestamp tag added by the slave timestamp working clock at the deterministic timestamp position are determined, the master timestamp tag represents the sending moment of the message, and the slave timestamp tag represents the receiving moment of the message. Then, the time deviation between the base station and the wireless connection device is calculated according to the master timestamp tag and the slave timestamp tag, i.e., the sending moment and the receiving moment, and then the wireless connection device can calibrate its own time according to the time deviation to keep synchronized with the time of the master base station.

After that, the precision time protocol stack (PTP) can also be run to recover the pulse per second and time information, so as to perform clock synchronization on the downstream devices of the wireless connection device.

In addition, as shown in FIG. 15, before S33, the method further includes:

S34, sending a delay message to the base station, and determining a sending moment of the delay message sent by the wireless connection device;

S35, determining a receiving moment of the delay message received by the base station;

S33 includes:

S36, performing a synchronous clock recovery action according to the master timestamp working clock, the slave timestamp working clock, and the sending moment and receiving moment of the delay message.

It can be understood that, as the master clock source, the base station transparently transmits the timestamp information of the processor, switching chip, network port PHY chip, etc. through the air interface during the synchroniza-

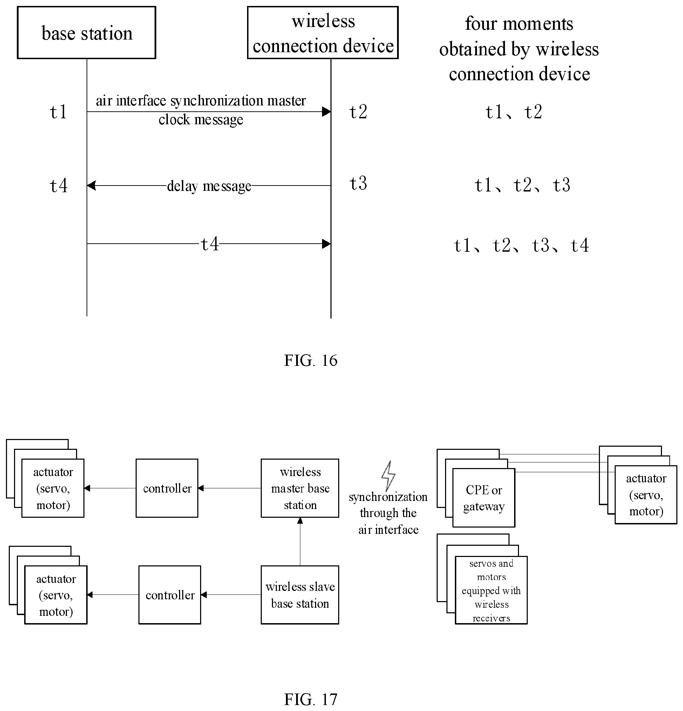

tion process with the wireless connection device, so that the timestamp information of the wireless connection device is synchronized with the timestamp of the base station. In addition, as shown in FIG. 16, the certainty of air interface transmission can also be guaranteed through air interface resource reservation.

In an embodiment, receiving the master clock message sent by the base station can be understood as a synchronization message (Sync), and the moment t1 when the base station sends the Sync message and the moment t2 when the wireless connection device receives the Sync message are determined, and the moment t1 and the moment t2 can be determined according to the master timestamp tag and the slave timestamp tag.

In an embodiment, the wireless connection device sends a delay request message, hereinafter referred to as Delay_Req message, to the base station. On the one hand, the wireless connection device determines the sending time t3 of the Delay_Req message. On the other hand, after receiving the Delay_Req message, the base station sends the receiving moment t4 to the wireless connection device.

Through the above message transmission process, the wireless connection device obtains four moments t1, t2, t3 and t4, and uses these four moments to calculate the path delay and time deviation between the base station and the wireless connection device. The formulas are as follows:

Round-trip total link delay between the base station and the wireless connection device=[(t2-t1)+(t4-t3)];

One-way link delay between the base station and the wireless connection device=[(t2-t1)+(t4-t3)]/2;

Clock offset of the wireless connection device relative to the base station=(t2-t1)-[(t2-t1)+(t4-t3)]/2=[(t2-t1)-(t4-t3)]/2.

The wireless connection device adjusts the local time according to the time deviation calculated above, so as to realize clock synchronization with the base station.

On the basis of the air interface synchronization master clock message, the solution obtains the sending moment and receiving moment of the delay message and includes the sending moment and receiving moment in the calculation of the time deviation, which makes up for the uncertainty of transmission time caused by various factors to a certain extent, thereby calibrating the local clock more accurately, ensuring that the clock of the wireless connection device is synchronized with the clock of the base station, and improving the accuracy and reliability.

In a technical solution provided in the embodiment, after receiving the air interface synchronization master clock message sent by the base station, the wireless connection device compares the associated master timestamp working clock with the locally used slave timestamp working clock, and then performs a synchronous clock recovery action. That is, the wireless connection device performs synchronization based on the master clock source inside the base station, and so does the wired connection device, i.e., the reference clock sources of the wireless connection device and the wired connection device are the same. In this way, the clock synchronization results of the wireless connection device and the wired connection device are consistent, thereby effectively solving the time deviation problem between the wireless connection device and the wired connection device and ensuring the reliability of the clock synchronization results of the entire convergence control system.

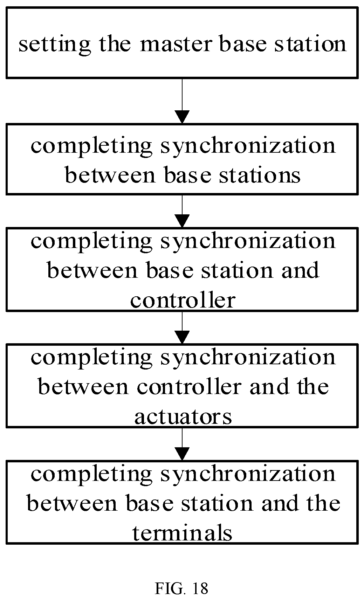

In an embodiment, as shown in FIG. 17, the wired-wireless convergence control system includes several base stations, controllers, actuators and terminal devices. As shown in FIG. 18, one of the base stations is selected as the master base station, set as the clock synchronization source of the entire system, and then devices such as controllers, actuators and terminal devices on the link node are synchronized.

Step 1, setting base station 0 as the master base station;
Step 2, completing synchronization between base station 0 and base station 1;
Step 3, completing synchronization between base station 0 and controller 0;
Step 4, completing synchronization between base station 1 and controller 1;
Step 5, completing synchronization between controller 0 and the actuators directly connected to the controller 0;
Step 6, completing synchronization between controller 1 and the actuators directly connected to the controller 1;
Step 7, completing synchronization between base station 0 and the terminals directly connected to the base station 0; and
Step 8, completing synchronization between base station 1 and the terminals directly connected to the base station 1;

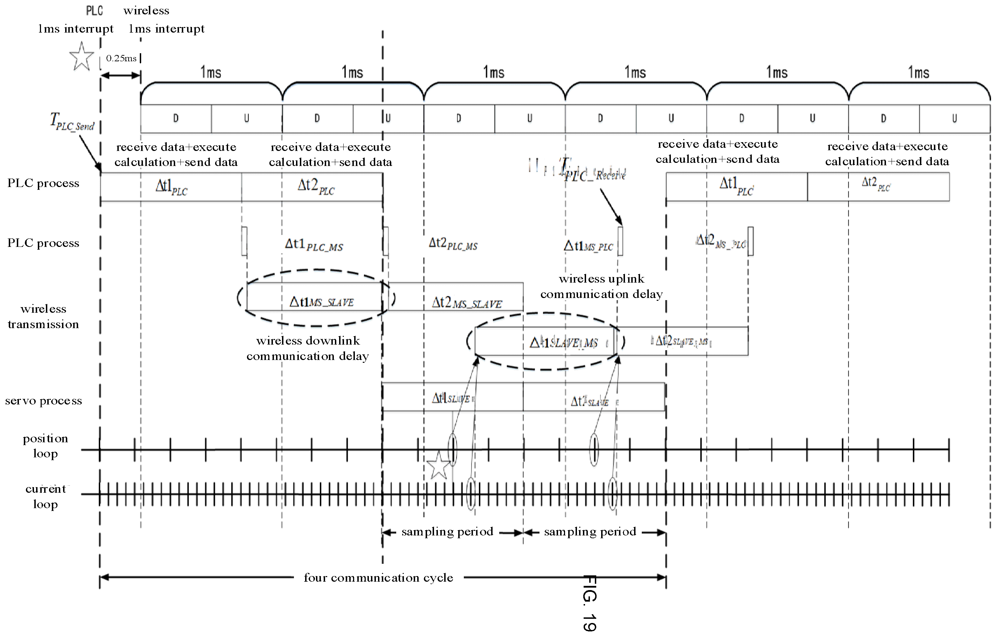

In addition, after the industrial wireless base station is synchronized with the wired controller and actuator, the following timing control alignment is designed as an example to realize the synchronous timing between the industrial wireless system and wired system, as shown in FIG. 19.

The frame structure of the base station is a 1ms period, with a total of 8 slots, slot 0~slot 3 are D slots with a timing

length of 0.5ms, corresponding to D in the FIG. 19, and slot 4~slot 7 are U slots with a timing length of 0.5ms, corresponding to U in the FIG. 19.

Wireless transmission needs to be two slots in advance, that is, the application layer data of the controller needs to be sent to the base station 250μs in advance.

Wireless receiving processing needs to be delayed by two slots, that is, the data decoded by the terminal device needs to be sent to the driver with a delay of 250μs.

The entire wireless processing takes 1ms, including two slots for transmission, two slots for reception, and four slots for air interface transmission.

The interrupt of the controller is 250μs earlier than the interrupt of the base station, and the time for receiving data, processing and delivering application layer data packets is 1ms.

The time for the driver to receive data, process and send feedback data packets is also 1ms, and the feedback data is the current loop, position loop and other data of the previous control cycle.

As shown in FIG. 19, $\triangle t1_{PLC}$ is the time for the PLC to receive data, perform operations and send data, the start of the execution cycle; $\triangle t1_{PLC_MS}$ is the time for PLC data to be transmitted to MS via wired; $\triangle t1_{MS_SLAVE}$ is the wireless transmission time for MS to receive data packets from wired slaves and send the data packets to the servo after wireless processing; $\triangle t1_{SLAVE}$ is the execution time of the servo after receiving the PLC data packet, and the time for packaging the sampled data of the current loop and position loop; $\triangle t1_{SLAVE_MS}$ is the wireless transmission time for TS to receive the servo data packet and send it to the PLC after wireless processing; $\triangle t1_{MS_PLC}$ is the time for the servo data packet to be transmitted from MS to PLC via wired; $\triangle t1_{PLC'}$ is the time for the PLC to receive data, perform operations and send data, the end of the execution cycle; $\triangle t1_{PLC_Send}$ is the absolute time of PLC data packet sending, year, month, day, hour, minute, second; $\triangle t1_{PLC_Receive}$ is the absolute time when the servo data packet arrives at the PLC, year, month, day, hour, minute, second;

$$\triangle t1_{PLC_Receive}=\triangle t1_{PLC_Send}+\triangle t1_{PLC}+\triangle t1_{PLC_MS}+\triangle t1_{MS_SLAVE}+\triangle t1_{SLAVE}+\triangle t1_{SLAVE_M}\ s+\triangle t1_{MS_PLC}+\triangle t1_{PLC'}.$$

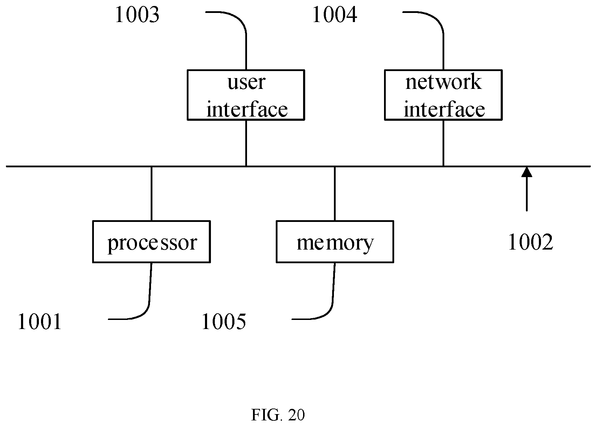

As shown in FIG. 20, FIG. 20 is a schematic structural diagram of a device in a hardware operating environment involved in the solutions of the embodiments of the present application.

As shown in FIG. 20, the device may include: a processor 1001, such as a central processing unit (CPU), a communication bus 1002, a user interface 1003, a network interface 1004, and a memory 1005. Wherein, the communication bus 1002 is used to realize connection and communication between these components. The user interface 1003 may include a display, an input unit such as a keyboard, and optionally, the user interface 1003 may also include a standard wired interface and a wireless interface. In an embodiment, the network interface 1004 may include a standard wired interface and a wireless interface (such as a Wireless-Fidelity interface). The memory 1005 may be a high-speed random access memory (RAM), or a stable non-volatile memory (NVM), such as a disk memory. In an embodiment, the memory 1005 may also be a storage device independent of the aforementioned processor 1001.

Those skilled in the art can understand that the structure shown in FIG. 20 does not constitute a limitation on the device, and may include more or fewer components than those shown, or combine some components, or arrange different components.

As shown in FIG. 20, the memory 1005 as a storage medium may include an operating system, a data storage module, a network communication module, a user interface module and a clock synchronization program.

In the device shown in FIG. 20, the network interface 1004 is mainly used for data communication with other devices; the user interface 1003 is mainly used for data interaction with users; the processor 1001 and the memory 1005 in the device of the present application may be provided in the device, and the device calls the clock synchronization program stored in the memory 1005 through the processor 1001 and executes the clock synchronization method provided by the embodiments of the present application.

An embodiment of the present application provides a computer-readable storage medium, on which a computer program is stored, and when the computer program is run by a processor, the steps in any of the above embodiments of the clock synchronization method are implemented.

Since the embodiments of the computer-readable storage medium correspond to the embodiments of the method part, reference is made to the description of the embodiments of the method part for the embodiments of the computer-readable storage medium part, and details are not repeated here.

It should be noted that, in this document, the terms "include", "comprise" or any other variation thereof are intended to cover a non-exclusive inclusion, such that a process, method, article or system that includes a list of elements includes not only those elements, but also other elements not explicitly listed, or elements inherent to such process, method, article or system. Without further limitation, an element defined by the statement "including a..." does not exclude the existence of other identical elements in the process, method, article or system that includes the element.

The serial numbers of the embodiments of the present application are merely for description and do not represent

the advantages and disadvantages of the embodiments.

Through the above description of the embodiments, those skilled in the art can clearly understand that the methods of the above embodiments can be implemented by means of software plus a necessary general hardware platform, and of course, can also be implemented by hardware, but in many cases, the former is a better embodiment. Based on such understanding, the technical solutions of the present application essentially or the part that contributes to the related art can be embodied in the form of a software product, which is stored in a storage medium as described above (such as ROM/RAM, magnetic disk, optical disk) and includes several instructions to enable a terminal device (which can be a mobile phone, a computer, a server, or a network device, etc.) to execute the methods described in the embodiments of the present application.

The above are only optional embodiments of the present application, and are not intended to limit the patent scope of the present application. Any equivalent structure or equivalent process transformation made by using the description and drawings of the present application, or directly or indirectly applied to other related technical fields, are also included in the patent protection scope of the present application.

## Claims

1. A clock synchronization method, applied to a base station of a convergence control system, wherein the convergence control system comprises a controller, an actuator and a terminal device, a first side of the controller is connected to the actuator via a wired communication link, a second side of the controller is connected to the base station via a wired communication link, the actuator is connected to the base station via a wired communication link, and the terminal device is connected to the base station via a wireless communication link, the clock synchronization method comprises the following steps:

   selecting a master clock source inside the base station as a clock synchronization source of the convergence control system;
   constructing a wired synchronization master clock message and an air interface synchronization master clock message according to the clock synchronization source; and
   sending the wired synchronization master clock message to a wired connection device, and sending the air interface synchronization master clock message to a wireless connection device.

2. The clock synchronization method according to claim 1, wherein the constructing the wired synchronization master clock message and the air interface synchronization master clock message according to the clock synchronization source comprises:

   sending a clock signal corresponding to the clock synchronization source to a clock frequency divider and a phase-locked loop respectively;
   performing frequency division on the clock signal through the clock frequency divider to generate a corresponding pulse per second and time information;
   eliminating jitter of the clock signal through the phase-locked loop to generate a master timestamp working clock;
   generating the wired synchronization master clock message according to the pulse per second and the time information; and
   generating the air interface synchronization master clock message according to the master timestamp working clock, the pulse per second and the time information.

3. The clock synchronization method according to claim 1, wherein the selecting the master clock source inside the base station as the clock synchronization source of the convergence control system comprises:

   in response to that the base station is a master base station, obtaining wireless system design requirements of the convergence control system, and determining a crystal oscillator frequency offset index according to the wireless system design requirements; and
   taking a target crystal oscillator selected according to the crystal oscillator frequency offset index as the clock synchronization source.

4. The clock synchronization method according to claim 1, wherein before the selecting the master clock source inside the base station as the clock synchronization source of the convergence control system, the method further comprises:

in response to that the base station is configured as a slave base station, receiving the wired synchronization master clock message sent by a master base station; and
performing a synchronous clock recovery action according to the wired synchronization master clock message;
the selecting the master clock source inside the base station as the clock synchronization source of the convergence control system comprises:
taking a recovered synchronous clock as the clock synchronization source.

**5.** The clock synchronization method according to any one of claims 1 to 4, wherein after the sending the wired synchronization master clock message to the wired connection device, and sending the air interface synchronization master clock message to the wireless connection device, the method comprises:

calculating a data delivery time period of the controller through a service control cycle parameter; and
sending timing information to the controller in the data delivery time period according to the pulse per second corresponding to the clock synchronization source.

**6.** A clock synchronization method, applied to a controller of a convergence control system, wherein the clock synchronization method comprises the following steps:

receiving a wired synchronization master clock message sent by a base station; and
performing a synchronous clock recovery action according to the wired synchronization master clock message.

**7.** The clock synchronization method according to claim 6, wherein after the performing the synchronous clock recovery action according to the wired synchronization master clock message, the method further comprises:
receiving timing information sent by the base station and performing services within a specified time of the timing information.

**8.** A clock synchronization method, applied to an actuator of a convergence control system, wherein the clock synchronization method comprises the following steps:

receiving a wired synchronization master clock message sent by a base station or a controller; and
performing a synchronous clock recovery action according to the wired synchronization master clock message.

**9.** A clock synchronization method, applied to a wireless connection device of a convergence control system, wherein the clock synchronization method comprises the following steps:

receiving an air interface synchronization master clock message sent by a base station;
obtaining a master timestamp working clock associated with the air interface synchronization master clock message and a slave timestamp working clock of a local device; and
performing a synchronous clock recovery action according to the master timestamp working clock and the slave timestamp working clock.

**10.** The clock synchronization method according to claim 9, wherein before the performing the synchronous clock recovery action according to the master timestamp working clock and the slave timestamp working clock, the method further comprises:

sending a delay message to the base station, and determining a sending moment of the delay message sent by the wireless connection device;
determining a receiving moment of the delay message received by the base station;
the performing the synchronous clock recovery action according to the master timestamp working clock and the slave timestamp working clock comprises:
performing a synchronous clock recovery action according to the master timestamp working clock, the slave timestamp working clock, and the sending moment and receiving moment of the delay message.

**11.** A base station, **characterized by** comprising:

a memory;
a processor; and
a clock synchronization program stored on the memory and executable on the processor,

wherein the clock synchronization program is configured to implement the clock synchronization method according to any one of claims 1 to 5.

**12.** A controller, **characterized by** comprising:

a memory;
a processor; and
a clock synchronization program stored on the memory and executable on the processor,
wherein the clock synchronization program is configured to implement the clock synchronization method according to any one of claims 6 to 7.

**13.** An actuator, **characterized by** comprising:

a memory;
a processor; and
a clock synchronization program stored on the memory and executable on the processor,
wherein the clock synchronization program is configured to implement the clock synchronization method according to claim 8.

**14.** A wireless connection device, **characterized by** comprising:

a memory;
a processor; and
a clock synchronization program stored on the memory and executable on the processor,
wherein the clock synchronization program is configured to implement the clock synchronization method according to any one of claims 9 to 10.

**15.** A computer-readable storage medium, **characterized in that** a clock synchronization program is stored on the computer-readable storage medium, and the clock synchronization program, when executed by a processor, implements the clock synchronization method according to any one of claims 1 to 10.

external clock synchronization source
actuator
controller
actuator
controller
actuator
controller

FIG. 1

external clock synchronization source
wireless base station 1
synchronization through the air interface
wireless connection device
external clock synchronization source
wireless base station 2
synchronization through the air interface
wireless connection device

FIG. 2

external clock synchronization source
external clock synchronization source
actuator
master controller
wireless base station
synchronization through the air interface
wireless connection device
actuator
slave controller
wireless base station
synchronization through the air interface
wireless connection device

FIG. 3

selecting a master clock source inside the base station as a clock synchronization source of the convergence control system
S11
constructing a wired synchronization master clock message and an air interface synchronization master clock message according to the clock synchronization source
S12
sending the wired synchronization master clock message to a wired connection device, and sending the air interface synchronization master clock message to a wireless connection device
S13

FIG. 4

actuator
controller
master base station
synchronization through the air interface
terminal device
actuator
controller
slave base station
synchronization through the air interface
terminal device

FIG. 5

wired connection device
wireless master base station
wireless connection device
wired synchronization master clock message and air interface synchronization master clock message
wired synchronization master clock message
air interface synchronization master clock message

FIG. 6

in response to that the base station is a master base station, obtaining wireless system design requirements of the convergence control system, and determining a crystal oscillator frequency offset index according to the wireless system design requirements
S111
taking a target crystal oscillator selected according to the crystal oscillator frequency offset index as the clock synchronization source
S112
constructing a wired synchronization master clock message and an air interface synchronization master clock message according to the clock synchronization source
S12
sending the wired synchronization master clock message to a wired connection device, and sending the air interface synchronization master clock message to a wireless connection device
S13

FIG. 7

selecting a master clock source inside the base station as a clock synchronization source of the convergence control system
S11
sending a clock signal corresponding to the clock synchronization source to a clock frequency divider and a phase-locked loop respectively
S121
performing frequency division on the clock signal through the clock frequency divider to generate a corresponding pulse per second and time information
S122
eliminating jitter of the clock signal through the phase-locked loop to generate a master timestamp working clock
S123
generating the wired synchronization master clock message according to the pulse per second and the time information
S124
generating the air interface synchronization master clock message according to the master timestamp working clock, the pulse per second and the time information
S125
sending the wired synchronization master clock message to a wired connection device, and sending the air interface synchronization master clock message to a wireless connection device
S13

FIG. 8

base station
wireless connection device
master clock message of the application adaptation layer
application adaptation layer
the pulse per second and time information are recovered
deterministic timestamp position
a master timestamp tag is added
master timestamp working clock
wireless protocol stack
deterministic timestamp position
a master timestamp tag is added
slave timestamp working clock
wireless protocol stack
deterministic enhanced wireless system

FIG. 9

in response to that the base station is configured as a slave base station, receiving the wired synchronization master clock message sent by a master base station
S14
performing a synchronous clock recovery action according to the wired synchronization master clock message
S15
taking a recovered synchronous clock as the clock synchronization source
S16
constructing a wired synchronization master clock message and an air interface synchronization master clock message according to the clock synchronization source
S12
sending the wired synchronization master clock message to a wired connection device, and sending the air interface synchronization master clock message to a wireless connection device
S13

FIG. 10

selecting a master clock source inside the base station as a clock synchronization source of the convergence control system
S11
constructing a wired synchronization master clock message and an air interface synchronization master clock message according to the clock synchronization source
S12
sending the wired synchronization master clock message to a wired connection device, and sending the air interface synchronization master clock message to a wireless connection device
S13
calculating a data delivery time period of the controller through a service control cycle parameter
S17
sending timing information to the controller in the data delivery time period according to the pulse per second corresponding to the clock synchronization source
S18

FIG. 11

receiving a wired synchronization master clock message sent by a base station
S21
performing a synchronous clock recovery action according to the wired synchronization master clock message
S22

FIG. 12

receiving a wired synchronization master clock message sent by a base station
S21
performing a synchronous clock recovery action according to the wired synchronization master clock message
S22
receiving timing information sent by the base station, and performing services within a specified time of the timing information
S23

FIG. 13

receiving an air interface synchronization master clock message sent by a base station
S31
obtaining a master timestamp working clock associated with the air interface synchronization master clock message and a slave timestamp working clock of a local device
S32
performing a synchronous clock recovery action according to the master timestamp working clock and the slave timestamp working clock
S33

FIG. 14

receiving an air interface synchronization master clock message sent by a base station
S31
obtaining a master timestamp working clock associated with the air interface synchronization master clock message and a slave timestamp working clock of a local device
S32
sending a delay message to the base station, and determining a sending moment of the delay message sent by the wireless connection device
S34
determining a receiving moment of the delay message received by the base station
S35
performing a synchronous clock recovery action according to the master timestamp working clock, the slave timestamp working clock, and the sending moment and receiving moment of the delay message
S36

FIG. 15

base station
wireless connection device
four moments obtained by wireless connection device
t1
air interface synchronization master clock message
t2
t1、t2
t4
delay message
t3
t1、t2、t3
t4
t1、t2、t3、t4

FIG. 16

actuator (servo, motor)
controller
wireless master base station
synchronization through the air interface
CPE or gateway
actuator (servo, motor)
actuator (servo, motor)
controller
wireless slave base station
servos and motors equipped with wireless receivers

FIG. 17

setting the master base station
completing synchronization between base stations
completing synchronization between base station and controller
completing synchronization between controller and the actuators
completing synchronization between base station and the terminals

FIG. 18

PLC
1ms interrupt
wireless
1ms interrupt
0.25ms
1ms
D
U
TPLC_Send
receive data+execute calculation+send data
PLC process
Δt1PLC
Δt2PLC
PLC process
Δt1PLC_MS
Δt2PLC_MS
Δt1MS_PLC
wireless transmission
Δt1MS_SLAVE
Δt2MS_SLAVE
wireless downlink communication delay
wireless uplink communication delay
servo process
position loop
current loop
sampling period
four communication cycle

FIG. 19

1003
1004
user interface
network interface
processor
memory
1002
1001
1005

FIG. 20

## INTERNATIONAL SEARCH REPORT

International application No. **PCT/CN2024/078642**

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE; 3GPP: 时钟, 晶振, 同步源, 时钟源, 主时钟, 同步, 基站, 空口, 报文, 有线, 无线, clock, crystalvibration, synchronization source, clock source, master clock, synchronization, base station, BS, message, wired, wireless

**C. DOCUMENTS CONSIDERED TO BE RELEVANT**

| Category* | Citation of document, with indication, where appropriate, of the relevant passages | Relevant to claim No. |
|---|---|---|
| PX | CN 117479287 A (SHENZHEN INOVANCE TECHNOLOGY CO., LTD.) 30 January 2024 (2024-01-30)<br>claims 1-15 | 1-15 |
| X | CN 112637945 A (JIANGSU FUTURE NETWORKS INNOVATION INSTITUTE) 09 April 2021 (2021-04-09)<br>description, paragraphs [0002]-[0078] | 1-15 |
| A | US 2019059066 A1 (TELEFONAKTIEBOLAGET LM ERICSSON (PUBL)) 21 February 2019 (2019-02-21)<br>entire document | 1-15 |
| A | US 2021400610 A1 (TOSHIBA K.K.) 23 December 2021 (2021-12-23)<br>entire document | 1-15 |
| A | WO 2023170688 A1 (WAVES AUDIO LTD.) 14 September 2023 (2023-09-14)<br>entire document | 1-15 |

☐ Further documents are listed in the continuation of Box C. ☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 June 2024** | **15 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/078642**

| Patent document cited in search report | Publication date (day/month/year) | Patent family member(s) | Publication date (day/month/year) |
|---|---|---|---|
| CN 117479287 A | 30 January 2024 | None | |
| CN 112637945 A | 09 April 2021 | None | |
| US 2019059066 A1 | 21 February 2019 | None | |
| US 2021400610 A1 | 23 December 2021 | None | |
| WO 2023170688 A1 | 14 September 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311584833